(19) Europäisches Patentamt
European Patent Office
Office européen des brevets

(11) Veröffentlichungsnummer: **0 157 758**
**B1**

# (12) EUROPÄISCHE PATENTSCHRIFT

(45) Veröffentlichungstag der Patentschrift: **13.09.89**

(51) Int. Cl.⁴: **C 10 J 3/46,** C 01 B 3/36

(21) Anmeldenummer: **85890069.9**

(22) Anmeldetag: **21.03.85**

(54) **Verfahren zur Herstellung von Synthesegasen, insbesondere Reduktionsgasen, sowie Vorrichtung zur Durchführung des Verfahrens.**

(30) Priorität: **02.04.84 AT 1110/84**

(43) Veröffentlichungstag der Anmeldung: **09.10.85 Patentblatt 85/41**

(45) Bekanntmachung des Hinweises auf die Patenterteilung: **13.09.89 Patentblatt 89/37**

(84) Benannte Vertragsstaaten: **BE CH DE FR GB IT LI LU NL SE**

(56) Entgegenhaltungen:
**EP-A-0 057 029**
**CA-A-1 059 065**
**DD-A-114 395**
**DE-A-3 035 715**
**DE-B-1 061 300**
**FR-A-2 528 162**
**GB-A-2 010 901**
**US-A-4 472 172**

(73) Patentinhaber: **VOEST- ALPINE INDUSTRIEANLAGENBAU GESELLSCHAFT M.B.H., Turmstrasse 44, A-4020 Linz (AT)**

(72) Erfinder: **Pirklbauer, Wilfried, Dr., Am Auring 11, A-4501 Neuhofen (AT)**
Erfinder: **Jarema, Ferdinand, Dipl.- Ing., Dinghoferstrasse 63, A-4020 Linz (AT)**

(74) Vertreter: **Wolfram, Gustav, Dipl.- Ing., Schwindgasse 7 P.O. Box 205, A-1041 Wien (AT)**

**EP 0 157 758 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft ein Verfahren zur Herstellung von Synthesegasen, insbesondere Reduktionsgasen, aus kohlenstoffhältigen Brennstoffen, wie Kohle, Koks, Erdölprodukten, Erdgas, Kokereigas einerseits und sauerstoffhältigen, mit den Brennstoffen endotherm reagierenden Gasen, wie Wasserdampf und Kohlendioxid andererseits, durch Umsetzen dieser Ausgangsprodukte in einer Plasmareaktionszone, wobei die umzusetzenden Komponenten gemeinsam als sogenanntes Einspeisfluid (Feedgas) durch eine langgestreckte Reaktionskammer geleitet werden und über die gesamte Längserstreckung der Reaktionskammer ein zentraler Plasmastrahl (Plasmabogen) ausgebildet wird, sowie eine Vorrichtung zur Durchführung des Verfahrens.

Solche Synthese- bzw. Reduktionsgase werden in großen Mengen beispielsweise für Direktreduktionsanlagen zur Herstellung von Eisenschwamm aus Eisenoxiden benötigt.

Bisher wurde zur Versorgung von mit Reduktionsgas arbeitenden Direktreduktionsanlagen meist so vorgegangen, daß Erdgas in einem sogenannten Reformer in Anwesenheit von Wasser und/oder Kohlendioxid katalytisch gespalten wurde. Das resultierende, im wesentlichen aus Kohlenmonoxid und Wasserstoff bestehende Gasgemisch ist zur Direktreduktion von oxidischem Ausgangsmaterial zu Metallen geeignet. Ein solcher Reformer ist aus außenbeheizten, mit einem Katalysator - beispielsweise auf Kobalt-Nickel-Basis - gefüllten Rohren aufgebaut, durch welche das Ausgangs-Gasgemisch geleitet und dabei umgesetzt wird.

Bereits geringe, im Ausgangs-Gasgemisch enthaltene Schwefelmengen können allerdings zur Vergiftung und somit Inaktivierung des Katalysators führen. Außerdem kommt es immer wieder zu Rußabscheidungen auf der Katalysatormasse, wodurch empfindliche Produktionsstörungen infolge Unterversorgung bzw. sogar Unterbrechung der Versorgung der Direktreduktionsanlage mit Reduktionsgas bewirkt werden. Das Rohrmaterial der Reformer muß sehr hohen Temperaturen von etwa 1000°C standhalten, weswegen nur hochwärmebeständige Legierungen, beispielsweise Schleudergußteile auf Chrom-Nickel-Basis, als Werkstoff in Frage kommen. Selbst dieses Material neigt bei der ständigen chemischen und thermischen Belastung zu interkristalliner Korrosion und damit zur Rißbildung. Sowohl der Katalysator als auch die Rohre müssen daher immer wieder in bestimmten Zeitabständen gewechselt werden, wodurch hohe Kosten anfallen.

Die Kohlevergasung sowie die Umwandlung von anderen Gasen oder flüssigen Kohlenstoffträgern zur Reduktionsgaserzeugung fand bislang keine ausgedehnte praktische Anwendung.

Aus der DE-A-3 104 281 ist ein Verfahren bekannt, bei dem in einem Gasgenerator aus einer Teilmenge eines Reaktionsgases eines Schachtofens, welches Gas von $CO_2$ und $H_2O$ befreit wird, aus einem festen Reduktionsmittel sowie aus einem Oxidationsmittel eine hauptsächlich aus CO und $H_2$ bestehende Gasmischung gebildet wird. Die Energiezufuhr erfolgt mittels eines Plasmabrenners, welcher das Reaktionsgas erhitzt. Als festes Reduktionsmittel wird insbesondere Kohlenstaub und als Oxidationsmittel insbesondere Wasser in das erhitzte Gas von der Seite her eingeblasen. Die Asche aus dem festen Reduktionsmittel sammelt sich am Boden des Generators und wird abgezogen.

Nachteilig bei dieser Reduktionsgaserzeugung ist, daß zwingend feste Reduktionsmittel bzw. Brennstoffe eingesetzt werden müssen und die von dem nach der DE-A-3 104 281 vorgesehenen indirekten Plasmabrenner abgegebene Energie nicht optimal ausgenutzt werden kann, da von einem Plasmabogen die Wärme vor allem durch Strahlung abgegeben wird und die Kontaktzone mit den Reaktanten nur sehr kurz ist.

In der DE-C-2 512 178 ist eine Vorrichtung zum Einbringen heißer, mittels Plasmaenergie erzeugter Reduktionsgase in das Gestell eines Hochofens über Blasformen beschrieben, welche Vorrichtung aus mindestens einem zylindrischen, konzentrisch zur Längsachse der Blasformen vor den Formen angeordneten Plasmaofen besteht. Der Plasmaofen ist sowohl zur Blasform als auch zur Heißwindzuführung hin offen und weist nach der dargestellten Ausführungsform drei radiale, um jeweils 120° zueinander versetzte indirekte Plasmabrenner auf. Die beschriebene Vorrichtung ist ganz spezifisch zur Aufheizung des Heißwindes eines Hochofens auf besonders hohe Temperaturen ausgelegt und ist zur Erzeugung von Synthesegasen im Sinne der bereits erwähnten Reformer ungeeignet.

In der DE-A-2 131 045 wird vorgeschlagen, einem Schachtofen, insbesondere einem Hochofen, anstelle von Wind ein warmes Reduktionsgas zuzuführen, wobei das Reduktionsgas u.a. durch vorzugsweise im Inneren der Blasformen des Schachtofens angeordnete Plasmabrenner erhitzt werden soll. Bezüglich der Herstellung des Reduktionsgases aus gasförmigen oder flüssigen Kohlenwasserstoffen und einem sauerstoffhältigen Gas wird nichts Näheres ausgeführt, sondern lediglich gesagt, daß diese Komponenten gleichzeitig und in geeigneten Anteilen dem Bogen eines Plasmas zugeführt werden können. Es hat sich herausgestellt, daß die Erzeugung eines Reduktionsgases nur auf Basis dieser Angaben in der Praxis - wenn überhaupt - nur mit einem äußerst unbefriedigenden Wirkungsgrad möglich ist.

Ein Verfahren der eingangs beschriebenen Art ist schließlich aus der FR-A-2 528 162 bekannt. Der Plasmastrahl wird dabei mit Hilfe eines Rückführgases gebildet, das neben Kohlendioxid auch andere Komponenten, wie z. B. Kohlenwasserstoffe, enthält. Da deren Zusammensetzung aber nicht konstant ist, besteht bei diesem Verfahren keine Möglichkeit, konstante Temperatur- und Strömungsverhältnisse in der Plasmareaktionszone aufrecht zu erhalten, was

für eine optimale Prozeßführung bzw. -regelung notwendig ist.

Die Erfindung bezweckt die Vermeidung der aufgezeigten Schwierigkeiten und Nachteile und stellt sich die Aufgabe, ein Verfahren der eingangs beschriebenen Art sowie eine Vorrichtung zur Durchführung dieses Verfahrens zur Verfügung zu stellen, wobei die Betriebsparameter des Plasmastrahles in gewünschter Weise variiert werden können.

Diese Aufgabe wird erfindungsgemäß dadurch gelöst, daß das Einspeisfluid in das Zentrum eines ringförmig ausgebildeten Plasmastrahles, gebildet aus einem Edelgas, Stickstoff, Wasserstoff, Kohlendioxid oder einer Mischung davon, geleitet wird, wobei es unter Umsetzung mit dem Plasmastrahlmantel diesen durchdringt und abgeleitet wird.

Durch die Wahl des Plasmagases ist es möglich, die Betriebsparameter des Plasmastrahles in gewünschter Weise zu variieren. Die einzelnen Gase haben einen verschiedenen elektrischen Spannungsgradienten ($E = U \cdot cm^{-1}$), wobei Argon den niedrigsten und Wasserstoff den höchsten Spannungsgradienten aufweisen. Von der Größe des Spannungsgradienten ist bei einer bestimmten Gesamtspannung zwischen Elektrode und Gegenelektrode die Länge des sich ausbildenden Plasmastrahles abhängig, was bedeutet, daß bei einem Gas mit niedrigerem Spannungsgradienten unter sonst gleichen Bedingungen die Plasmafackel länger ist. So hat bei Verwendung von Argon als Plasmagas und einer Spannung von etwa 800 V die Plasmafackel eine Länge bis zu etwa 1 m, wogegen bei Verwendung von Wasserstoff als Plasmagas und gleicher Spannung und Stromstärke der Strahl eine Länge von nur etwa 10 cm aufweist. Ist der Abstand der beiden Elektroden voneinander nicht veränderlich, muß beim Einsatz von Wasserstoff eine weitaus höhere Gesamtspannung angelegt werden als beispielsweise bei Verwendung von Argon, so daß für Wasserstoff als Plasmagas auch der Energieeintrag durch den Plasmastrahl viel höher ist.

Unter Einspeisfluid (Feedgas) ist entweder eine rein gasförmige Mischung zu verstehen oder ein Gemisch von Brennstoffen und sauerstoffhältigen Gasen, welches feste oder flüssige Kohlenstoffträger suspendiert enthält.

Mit Methan als Hauptbestandteil von Erdgas und einfachstem Kohlenwasserstoff verläuft die Hochtemperaturreaktion mit Kohlendioxid oder mit Wasser nach folgenden Reaktionsgleichungen:

$$CH_4 + CO_2 \rightleftarrows 2\,CO + 2\,H_2 \qquad (1)$$
$$CH_4 + H_2O \rightleftarrows CO + 3\,H_2 \qquad (2)$$

Mit Kohle- oder Koksstaub laufen die bekannten temperaturabhängigen Gleichgewichtsreaktionen

$$C + CO_2 \rightleftarrows 2\,CO \qquad (3)$$
$$C + H_2O \rightleftarrows CO + H_2 \qquad (4)$$

ab.

Durch engen Kontakt mit dem Plasmastrahl, der dadurch gegeben ist, weil das Einspeisfluid in das Zentrum des Plasmastrahles geleitet wird und daher den Plasmastrahlmantel durchdringen muß, stellt sich der Gleichgewichtszustand in außerordentlich kurzer Zeit ein. Bei den sehr hohen Temperaturen liegen praktisch nur noch die der rechten Seite der Gleichungen entsprechenden Gase vor.

Beim erfindungsgemäßen Verfahren findet während des Kontaktes mit dem langgestreckten Plasmastrahl auch eine heftige Durchwirbelung des Einspeisfluids statt, welche sich gleichfalls sehr günstig auf die Geschwindigkeit und Vollständigkeit der Umsetzungen auswirkt.

Ein eventueller Schwefelgehalt der Komponenten des Einspeisfluids kann sich in keiner Weise negativ auswirken. Im erzeugten Reduktionsgas enthaltene Schwefelverbindungen können jedoch entfernt werden, wenn der Schwefelgehalt des Produktes, welches durch Einwirkung des Reduktionsgases erhalten werden soll, unterhalb bestimmter Grenzwerte liegen muß.

Nach einer zweckmäßigen Ausführungsform des Verfahrens werden die umgesetzten Synthesegase nach Durchdringen des Plasmastrahlmantels umgelenkt und im Gegenstrom nach oben abgeleitet.

Eine erfindungsgemäße Vorrichtung zur Durchführung des Verfahrens mit einem feuerfest ausgekleideten oder gekühlten, als langgestreckte Reaktionskammer ausgebildeten Reaktionsgefäß, welches an einem Ende eine Plasmaelektrode (Kathode) und am anderen Ende eine Gegenelektrode (Anode) aufweist, mit Zuführungen für das Einspeisfluid sowie mit Ableitungen für die Synthese- bzw. Reduktionsgase, ist dadurch gekennzeichnet, daß die Plasmaelektrode als Ringelektrode ausgebildet ist, wobei eine Zuführung für das Einspeisfluid im Zentrum der Elektrode ausmündet, und daß die Ableitungen im Bereich des die Plasmaelektrode aufweisenden Endes des Reaktionsgefäßes vorgesehen sind.

Die Erfindung wird anhand der Zeichnung noch näher erläutert, die in schematischer Darstellung eine Ausführungsform der erfindungsgemäßen Vorrichtung darstellt.

Mit 1 ist eine feuerfest ausgekleidete Reaktionskammer mit einer als Ringelektrode 12 ausgebildeten Plasmaelektrode und einer Gegenelektrode 6 dargestellt. Im Zentrum der Ringelektrode 12 mündet die im Inneren des Plasmabrenners befindliche Zuführung 13 für das Einspeisfluid aus. Das der ringförmigen Plasmaelektrode 12 gleichfalls im Inneren des Plasmabrenners, jedoch außerhalb der zentralen Zuführung 13 zugeleitete Plasmagas ist durch die Richtungspfeile 4 angedeutet. Das Einspeisfluid tritt vom Zentrum des ringförmigen Plasmastrahles 5 ausgehend durch das Plasma. Der Strömungsverlauf ist durch die Pfeile 14 angedeutet. Während dieses Durchtrittsvorganges

wird das Einspeisfluid umgesetzt und verläßt als Reduktionsgas die Kammer 1 durch mindestens eine Ableitung 8.

## Patentansprüche

1. Verfahren zur Herstellung von Synthesegasen, insbesondere Reduktionsgasen, aus kohlenstoffhältigen Brennstoffen, wie Kohle, Koks, Erdölprodukten, Erdgas, Kokereigas einerseits und sauerstoffhältigen, mit den Brennstoffen endotherm reagierenden Gasen, wie Wasserdampf und Kohlendioxid andererseits, durch Umsetzen dieser Ausgangsprodukte in einer Plasmareaktionszone, wobei die umzusetzenden Komponenten gemeinsam als sogenanntes Einspeisfluid (Feedgas) durch eine langgestreckte Reaktionskammer geleitet werden und über die gesamte Längserstreckung der Reaktionskammer ein zentraler Plasmastrahl (Plasmabogen) ausgebildet wird, dadurch gekennzeichnet, daß das Einspeisfluid in das Zentrum eines ringförmig ausgebildeten Plasmastrahles, gebildet aus einem Edelgas, Stickstoff, Wasserstoff, Kohlendioxid oder einer Mischung davon, geleitet wird, wobei es unter Umsetzung mit dem Plasmastrahlmantel diesen durchdringt und abgeleitet wird.

2. Verfahren nach Anspruch 1, dadurch gekennzeichnet, daß die umgesetzten Synthesegase nach Durchdringen des Plasmastrahlmantels umgelenkt und im Gegenstrom nach oben abgeleitet werden.

3. Vorrichtung zur Durchführung des Verfahrens nach einem oder beiden der Ansprüche 1 und 2, mit einem feuerfest ausgekleideten oder gekühlten, als langgestreckte Reaktionskammer ausgebildeten Reaktionsgefäß (1), welches an einem Ende eine Plasmaelektrode (Kathode) und am anderen Ende eine Gegenelektrode (Anode) (6) aufweist, mit Zuführungen für das Einspeisfluid sowie mit Ableitungen für die Synthese- bzw. Reduktionsgase, dadurch gekennzeichnet, daß die Plasmaelektrode als Ringelektrode (12) ausgebildet ist, wobei eine Zuführung (13) für das Einspeisfluid im Zentrum der Elektrode (12) ausmündet, und daß die Ableitungen (8) im Bereich des die Plasmaelektrode aufweisenden Endes des Reaktionsgefäßes (1) vorgesehen sind.

## Claims

1. Method for the production of synthetic gases, in particular reduction gases, from carbonaceous fuels, such as coal, coke, petroleum products, natural gas, coke oven gas, on the one hand, and oxygen-containing gases endothermally reacting with the fuels, such as steam and carbon dioxide, on the other hand, by reacting these starting products in a plasma reaction zone, wherein the components to be reacted are commonly conducted through an elongate reaction chamber as a so-called feed fluid (feed gas) and a central plasma jet (plasma arc) is formed over the total longitudinal extension of the reaction chamber, characterised in that the feed fluid is supplied into the centre of an annularly shaped plasma jet formed by a noble gas, nitrogen, hydrogen, carbon dioxide or a mixture thereof, the feed fluid penetrating the jacket of the plasma jet while reacting with it and being discharged.

2. Method according to claim 1, characterised in that the reacted synthetic gases are deviated after having penetrated the jacket of the plasma jet and are upwardly discharged in counter-flow.

3. Arrangement for carrying out the method according to one or both of claims 1 and 2, comprising a refractorily lined or cooled reaction vessel (1) designed as an elongate reaction chamber (1), provided with a plasma electrode (cathode) on one end and a counter electrode (anode) (6) on the other end, and supply ducts for the feed fluid as well as discharge ducts for the synthetic or reduction gases, characterised in that the plasma electrode is designed as an annular electrode (12), a supply duct (13) for the feed fluid issuing in the centre of the electrode (12), and that the discharge ducts (8) are provided in the region of that end of the reaction vessel (1) where the plasma electrode is arranged.

## Revendications

1. Procédé pour la fabrication de gaz de synthèse, en particulier de gaz de réduction, à partir de combustibles contenant du carbone, tels que houille, coke, produits pétroliers, gaz naturel, gaz de cokerie d'une part et de gaz contenant de l'oxygène, donnant une réaction endotherme avec les combustibles, tels que vapeur d'eau et dioxyde de carbone d'autre part, par réaction de ces produits de départ dans une zone de réaction de plasma, les composants à faire réagir étant envoyés comme gaz dits d'alimentation à travers une chambre de réaction allongée et un jet de plasma central (arc à plasma) se formant sur toute la longueur de la chambre de réaction, caractérisé en ce que le gaz d'alimentation est envoyé dans le centre d'un jet de plasma annulaire, formé d'un gaz rare, d'azote, d'hydrogène, de dioxyde de carbone ou de leurs mélanges, en traversant l'enveloppe du jet de plasma dans la réaction avec celui-ci et il est retiré.

2. Procédé selon la revendication 1, caractérisé en ce que les gaz de synthèse ayant réagi sont déviés après avoir traversé l'enveloppe du jet de plasma et sont retirés vers le haut à contre-courant.

3. Dispositif pour la mise en oeuvre du procédé selon l'une ou les deux revendications 1 et 2, comportant un récipient de réaction (1) doublé d'un revêtement réfractaire ou refroidi, ayant la

forme d'une chambre de réaction allongée, qui présente à une extrémité une électrode à plasma (cathode) et à l'autre extrémité une contre-électrode (anode) (6), avec des conduites d'admission pour le gaz d'alimentation ainsi que des conduites de sortie pour les gaz de synthèse ou de réduction, caractérisé en ce que l'électrode à plasma a la forme d'une électrode annulaire (12), une conduite d'admission (13) pour le gaz d'alimentation débouchant dans le centre de l'électrode (12), et en ce que les conduites de sortie (8) sont prévues dans la région de l'extrémité du récipient de réaction (1) présentant l'électrode à plasma.

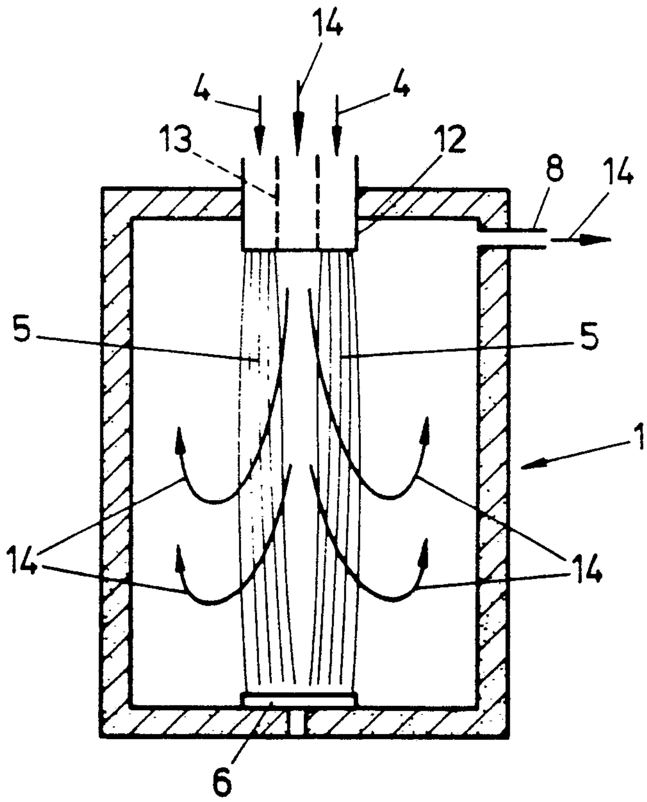
14
4
4
13
12
8
14
5
5
1
14
14
6